## Europäisches Patentamt
## European Patent Office
## Office européen des brevets

(11) Numéro de publication: **0 086 142**
**B1**

(12) **FASCICULE DE BREVET EUROPEEN**

(45) Date de publication du fascicule du brevet: **10.06.87**

(51) Int. Cl.⁴: **G 01 G 19/00, E 02 B 17/08**

(21) Numéro de dépôt: **83400202.4**

(22) Date de dépôt: **28.01.83**

(54) **Dispositif pour la mesure des charges appliquées aux bâtis des mécanismes élévateurs des plates-formes marines.**

(30) Priorité: **01.02.82 FR 8201536**

(43) Date de publication de la demande:
**17.08.83 Bulletin 83/33**

(45) Mention de la délivrance du brevet:
**10.06.87 Bulletin 87/24**

(84) Etats contractants désignés:
**AT BE CH DE FR GB IT LI LU NL SE**

(56) Documents cités:
**BE-A- 676 658**
**FR-A-2 069 404**
**FR-A-2 312 603**
**FR-A-2 411 270**
**GB-A- 696 780**

**Handbuch für elektrisches Messen mechanischer Grössen, C. Rohrbach (1967), page 509**

**Encyclopédiedes Sciences Industrielles, Quillet (1973), vol. E 2, page 203**

(73) Titulaire: **BRISSONNEAU ET LOTZ MARINE Société anonyme dite:**
**Rue de la Métallurgie Zone Industrielle**
**F-44471 Carquefou-Nantes (FR)**

(72) Inventeur: **Dantan, Olivier**
**rue de l'Aérodrome**
**F-44340 Bouguenais (FR)**

(74) Mandataire: **Lejet, Christian**
**Société JEUMONT-SCHNEIDER 31-32, Quai de Dion Bouton**
**F-92811 Puteaux Cedex (FR)**

## Description

La présente invention concerne les installations de plates-formes marines dites auto-élévatrices notamment prévues pour effectuer des opérations de forage en mer, pourvues d'une pluralité de jambes et d'une pluralité de mécanismes élévateurs associés permettant de règlar la position et le maintien en position de la plate-forme.

Ainsi le brevet FR—2 411 270 est relatif à une plate-forme marine dont chaque jambe est équipée d'un mécanisme élévateur du type à vérins, ce système de levage servant aussi de dispositif d'amortissement vertical et de dispositif de blocage et de cylindres hydrauliques permettant le dèplacement horizontal de la jambe et servant aussi de système d'amortissement de chocs horizontaux.

On peut préférer des mécanismes élévateurs du type à pignons et crémaillère. Le brevet FR—2 069 404 décrit un appareil de levage pour une plate-forme marine supportée par plusieurs pieds. A chaque pied sont associés une crémaillère double et un ensemble de levage comportant deux paires de pignons, les deux pignons de chaque paire étant situés face à face, transversalement par rapport à le crémaillère et chaque pignon étant entraîné par un moteur électrique, de manière à déterminer dans un sens ou dans un autre les mouvements requis.

Le brevet FR—2 312 603 est relatif à une plate-forme marine équipée de pieds, un système de levage à pignons et crémaillère étant associé à chacun d'eux. Il décrit plus particulièrement un système de compensation de charges et d'amortissement de chocs, monté sur un pied de la plate-forme. Ce système permet d'égaliser les efforts verticaux sur les membrures du pied et d'amortir les chocs lorsque l'extrémité du pied heurte le fond de la mer lors des déplacements de la plate-forme.

Ce système de compensation est adjoint à des empilages de rondelles élastiques disposés entre le pont principal de la plate-form et le mécanisme élévateur associé à chaque pied et qui participent à l'amortissement des efforts de compression.

L'invention est applicable aux installations connues de telles plates-formes dans lesquelles des moyens élastiques sont interposés entre le bâti auquel est fixé un mécanisme élévateur du type à pignons et crémaillère, et la structure de la plate-forme, de manière à autoriser un léger déplacement latéral des jambes par rapport à la structure de la plate-forme, telles que décrites par exemple dans les brevets US.A—3 606 251 et FR.A—2 497 248.

Elle a pour objet une telle plate-forme qui comprend un dispositif permettant de connaître à tour moment la charge appliquée à chacun des bâtis auxquels sont fixés les mécanismes élévateurs du type à pignons et crémaillère associés aux jambes de la plate-forme, afin de permettre d'agir en conséquence.

Selon l'invention, la plate-forme comprend un dispositif mesurant la charge supportée par le bâti et comportant des éléments compressibles tarés interposés entre la structure de la plate-forme et au moins un des bâtis et au moins un capteur disposé dans les mêmes conditions, le capteur comprend des moyens pour produire un signal fonction des positions relatives de la plate-forme et du bâti résultant de la charge supportée par ce dernier, ce signal étant transmis à des organes d'enregistrement et de lecture directe.

La présente invention sera mieux comprise et d'autres buts et avantages de celle-ci apparaîtront plus clairement à la lecture de la description suivante faite en référence aux dessins annexés, qui donnent à titre d'exemple non limitatif un mode de réalisation de l'invention.

La figure 1 représente de façon schématique un des ensembles élévateurs d'une plate-forme, auquel est appliqué un dispositif de mesure des charges, conforme à l'invention.

La figure 2 représente en coupe l'ensemble du dispositif de mesure.

La figure 3 représente à plus grande échelle un détail du dispositif représenté sur la Figure 2.

La figure 4 represénte, vue de dessus, une forme de réalisation d'un dispositif de mesure de charge, conforme à l'invention.

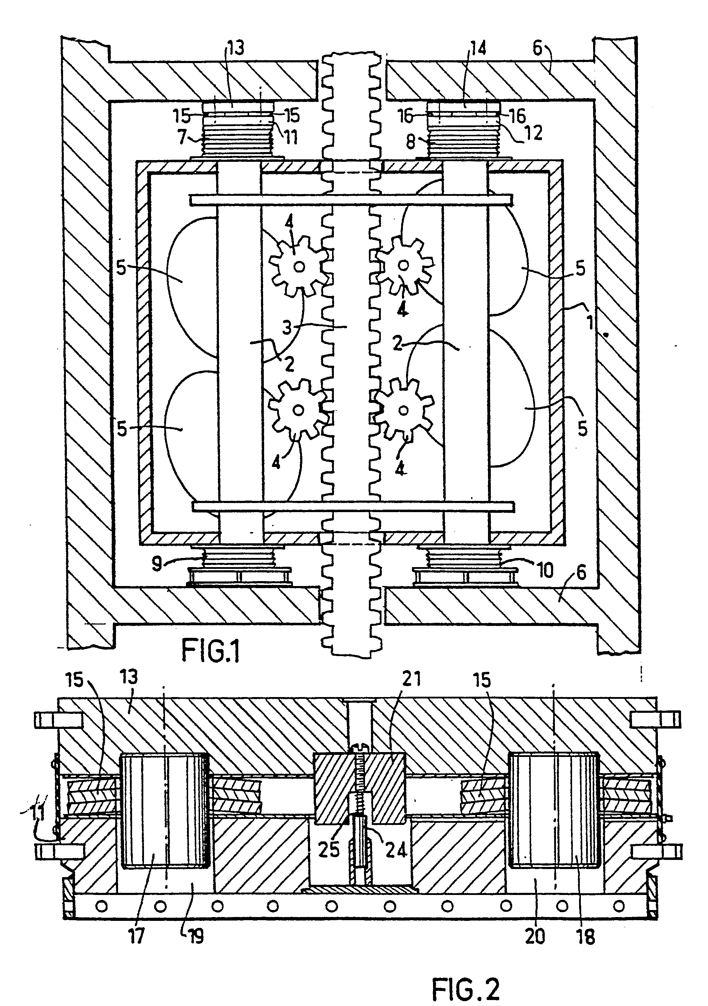

Sur la figure 1, la référence 1 désigne le carter du bâti 2 qui porte de manière connue les éléments de commande de mouvement (pignons 4 et moteurs et réducteurs 5) de la crémaillère 3 solidaire d'une jambe de la plate-forme 6.

Les références 7, 8, 9 et 10 désignent les éléments dotés d'une relative élasticité communément utilisés pour soustraire les pignons portés par le bâti aux efforts axiaux et transversaux pouvant résulter notamment de l'état de la mer. Ces éléments, on le rappelle, peuvent être constitués, par exemple, par run ensemble formé de plaques métalliques telles que d'acier intercalées avec des plaques d'un matériau élastique de manière à présenter une résistance suffisante à la compression. C'est aux éléments supérieurs 7 et 8 que sont adjoints les moyens de l'invention.

Les références 11 et 12 désignent des pièces fixes solidaires du bâti par l'intermédiare respectivement des éléments 7 et 8.

Les références 13 et 14 désignent respectivement des pièces solidaires de la structure de la plate-forme.

Les références 15 et 16 désignent les éléments compressibles tarés représentés en vue agrandie et en détail sur la figure 2.

La figure 2 représente de manière plus visible que sur la figure 1 les moyens compressibles 15 adjoints aux éléments élastiques 7 de la figure 1. Ces moyens compressibles en tout matériau approprié sont constitués notamment par des empilages de rondelles tarées (au nombre de trois dans cet example), en form générale de tronc de cône légérement bombé, dont la compression non rémanente est fonction de la force appliquée.

Les mouvements relatifs entre les pièces 11 et 13 solidaires respectivement du bâti et de la structure de la plate-forme sont guidés par les axes 17 et 18 coulissant respectivement dans les logements 19 et 20.

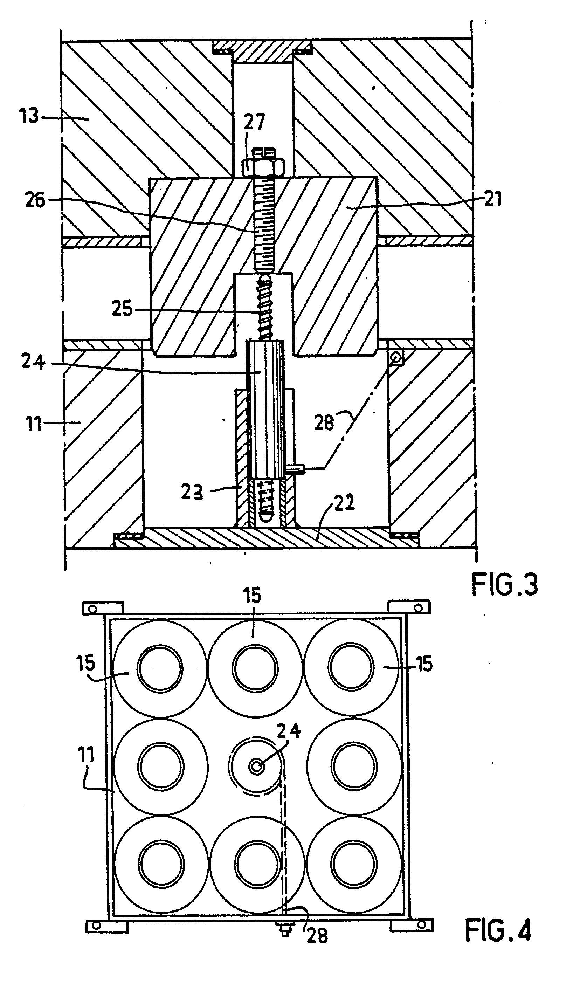

Les moyens permettant de déterminer et de transmettre à distance les informations concernant les positions relatives des pièces 11 et 13 sont inclus dans un logement ménagé entre les dites pièces et comprennent un moyen capteur qui sera décrit avec référence à la figure 3.

Dans l'example donné, ce capteur est du type magnétique à transformateur différential dont le noyau plongeur modifie suivant la position qu'il occupe le couplage entre les enroulements. Mais il est bien évident que tout autre type de capteur permettant d'obtenir les mêmes résultats pourrait être utilisé.

La disposition qui vient d'être indiquée pour les moyens compressibles 15 et les moyens capteurs associés aux moyens élastiques 7 de la figure 1 est rigoureusement la même pour les moyens compressibles 16 et les moyens capteurs correspondant associés aux moyens élastiques 8 de la figure 1.

On se référera maintenant à la figure 3 pour décrire le fonctionnement du dispositif. La pièce 21 est solidaire de la pièce mobile 13 tandis que l'embase 22 est solidaire de la pièce 11 solidaire du bâti. Cette pièce 22 constitue également en 23 un guide support du moyen capteur 24 à noyau plongeur 25 pourvu d'un ressort de rappel 29. Le noyau 25 est rendu solidaire de la pièce coulissante 21 par des moyens de fixation à vis et écrou 26 et 27.

La référence 28 désigne le câble incluant les conducteurs d'alimentation et de transmission du capteur. Dans ces conditions, on comprend qu'en fonction de la charge appliquée à la pièce 13, la pièce 21 qui en est solidaire agit sur le noyau 25 du capteur 24 dont l'information résultant de la modification du couplage entre ses enroulements est transmise par le câble 28 à des moyens aussi bien d'enregistrement que de lecture directe ou d'affichage.

La figure 4 représente en vue schématique en plan une forme de réalisation de l'invention. Sur cette figure les èlèments identiques à ceux des autres figures portent les mêmes références. Dans cet ensembles les éléments compressibles tarés 15 constitués par des rondelles sont répartis en huit empilages. Centralement à ces derniers est disposé un unique moyen capteur 24—25 dont la câble porte la référence 28.

Il est entendu que toute modification apportée par l'homme de l'Art dans le même esprit ne sortirait pas du cadre de la présente invention, notamment en ce qui concerne le nombre, la forme et la disposition des èlèments compressibles tarés ainsi que leur résistance, le nombre et le type des capteurs utilisés, qui peuvent être choisis suivant les cas et conditions d'utilisation.

Par exemple, les éléments compressibles peuvent également être constitués par un dynamomètre à ressorts de compression tarés.

## Revendications

1. Plate-forme marine, du type auto-élévatrice, dans laquelle le poids de la plat-forme est appliqué aux bâtis auxquels sont fixés les mécanismes élèvateurs du type à pignons et crémaillère associés aux jambes de la plate-forme, des éléments élastiques (7, 8, 9, 10) étant placés entre les bâtis et la structure de la plate-forme (6) de façon à autoriser des mouvements limités des jambes par rapport à ladite structure de la plate-forme, caractérisée en ce qu'elle comprend un dispositif mesurant la charge supportée par le bâti et comportant des éléments compressibles tarés (15) interposés entre la structure de la plate-forme (6) et au moins un des bâtis et au moins un capteur (24, 25) disposé dans les mêmes conditions, ledit capteur comprenant des moyens pour produire un signal fonction des positions relatives de la plate-forme (6) et dudit bâti (2) résultant de la charge supportée par ce dernier, ce signal étant transmis à des organnes d'enregistrement et de lecture directe.

2. Plate-forme selon la revendication 1, caractérisée en ce que les éléments compressibles tarés (15) et le capteur (24, 25) sont adjoints aux éléments élastiques supérieurs (7, 8).

3. Plate-forme selon la revendication 2, caractérisée en ce que les éléments compressibles (15) sont constitués d'empilages de rondelles, de forme générale tronconique, dont la déformation non rémanente est fonction de la charge appliquée.

4. Plate-forme selon la revendication 1, caractérisée en ce que ledit capteur est du type magnétique à transformateur différential dans lequel le noyau plongeur (25) modifie suivant la position qu'il occupe, le couplage entre les enroulements.

## Patentansprüche

1. Meeresplattform, vom automatisch, hebbaren Typ, bei welcher das Gewicht der Plattform auf die Aufbauteile ausgeübt wird, an denen die Hubmechanismen befestigt sind, welch vom Typ mit Ritzel und Zahnstange sind und die den Beinen der Plattform zugeordnet sind, wobei elastische Elemente (7, 8, 9, 10) zwischen de Aufbauteilen und der Struktur der Plattform (6) in solcher Weise angeordnet sind, daß begrentzte Bewegungen der Beine bezüglich der genannten Struktur der Plattform möglich sind, dadurch gekennzeichnet, daß sie eine Vorrichtung umfaßt, welche die Last mißt, die der Aufbau trägt, und welche austarierte kompressible Elemente (15) umfaßt, die zwischen der Struktur der Plattform (6) und wenigstens einem der Aufbauteile eingefügt sind, sowie wenigstens einen Meßwertaufnehmer (24, 25) umfaßt, der unter denselben Bedingungen angeordnet ist, wobei dieser Meßwertaufnehmer Mittel umfaßt, um ein Signal zu erzeugen, welches von den Relativstellungen der Plattform (6) und des Aufbaus (2) abhängt, die aus der von letzterem getragenen Last resultieren, wobei dieses Signal zu Einrichtungen für eine Aufzeichnung und für ein direktes Auslesen übetragen wird.

2. Plattform nach Anspruch 1, dadurch gekennzeichnet, daß die austarierten kompressiblen Element (15) und der Meßwertaufnehmer (24, 25) den oberen elastischen Elementen (7, 8) zugeordnet sind.

3. Plattform nach Anspruch 2, dadurch gekennzeichnet daß die kompressiblen Elemente (15) durch Stapel von allgemein kegelstumpffömigen Rundscheiben gebildet sind, deren nicht bleibende Deformierung von der aufgebrachten Last abhängt.

4. Plattform nach Anspruch 1, dadurch gekennzeichnet, daß der genannte Meßwertaufnehmer vom Differential-transformator-Magnettyp ist, bei welchem der Tauchkern (25) je nach der von ihm eigenommenen Stellung die Kopplung zwischen de Wicklungen verändert.

**Claims**

1. Offshore platform, of self-elevating type, wherein the weight of the platform is applied to frames to which there are fixed the elevating mechanism of the type using pinions and racks associated with the legs of the platform, elastic elements (7, 8, 9, 10) being situated between the frames and the structure of the platform (6) so as to allow limited movements of the legs relatively to the said structure of the platform, characterised in that it comprises a device measuring the load supported by the frame and comprising calibrated compressible elements (15) interposed between the structure of the platform (6) and at least one of the frames and at least one pickup (24, 25) arranged under the same conditions, the said pickup comprising means for producing a signal dependent on the relative positions of the platform (6) and of the said frame (2) resulting from the load supported by this latter, this signal being transmitted to recording and direct reading elements.

2. Platform according to claim 1, characterised in that the calibrated compressible elements (15) and the pickup (24, 25) are associated with the upper elastic elements (7, 8).

3. Platform according to claim 2, characterised in that the compressible elements (15) are constituted by stacks of discs of frustoconical general shape, the non-permanent deformation of which is dependent on the load applied.

4. Platform according to claim 1, characterised in that the said pick up is of the differential-transformer magnetic type wherein the plunger core (25) modifies the coupling between the windings in accordance with the position it occupies.

0 086 142

FIG.1

FIG.2

1

FIG.3

FIG.4